# EUROPEAN PATENT SPECIFICATION

(11) **EP 3 530 698 B1**
(45) Date of publication and mention of the grant of the patent: **16.09.2020**
(21) Application number: 17878983.0
(22) Date of filing: 08.11.2017
(51) Int. Cl.: C08L 77/00, C08K 3/22, C08K 5/098, C08K 5/20, C08K 5/3492

(54) **FLAME-RETARDANT POLYAMIDE RESIN COMPOSITION AND MOLDED ARTICLE COMPRISING SAME**
FLAMMHEMMENDE POLYAMIDHARZZUSAMMENSETZUNG UND FORMARTIKEL DAMIT
COMPOSITION DE RÉSINE DE POLYAMIDE IGNIFUGE ET ARTICLE MOULÉ LA COMPRENANT

(30) Priority: 06.12.2016 JP 2016236645
(43) Date of publication of application: 28.08.2019
(73) Proprietor: Toray Industries, Inc., Tokyo 103-8666 (JP)
(72) Inventor: HATTORI, Keiichi, Nagoya-shi Aichi 455-8502 (JP); TOBO, Shori, Nagoya-shi Aichi 455-8502 (JP); SHIBATA, Hiroshi, Nagoya-shi Aichi 455-8502 (JP)
(74) Representative: Mewburn Ellis LLP
(86) International application number: PCT/JP2017/040303
(87) International publication number: WO 2018/105295

(56) References cited:
- WO-A1-2013/099522
- WO-A1-2013/099522
- WO-A1-2014/042068
- CN-A- 103 408 750
- JP-A- H11 106 645
- JP-A- 2006 282 943
- JP-A- 2008 239 896
- JP-A- 2008 308 680
- JP-A- 2013 203 997

## Description

### TECHNICAL FIELD

The present invention relates to a flame-retardant polyamide resin composition excellent in the product's external appearance, glow wire property, moldability, and mechanical property, which composition contains a colorant; and a molded article containing the composition.

### BACKGROUND ART

Conventionally, because of excellent mechanical properties, heat resistance, flame retardancy, electric properties, moldability, and the like, polyamide resins have been widely used for industrial parts such as automobile parts and electric/electronic parts; and parts for daily necessaries including daily use furniture. In particular, these resins are indispensable for use in connectors and the like. However, in recent years, not only aesthetic shapes and external appearances, but also better safety are demanded for these products. Thus, housings, external parts, connectors, and the like are now required to have not only good external appearances and a variety of colors, but also higher flame retardancy. One example of a method for evaluation of flame retardancy is UL94 (Under Writers Laboratories Inc., Unites States). Another example of a method for evaluation of flame retardancy is a glow wire test, which assumes an electrical fire. This test evaluates "whether ignition occurs or not" in a state where a red-hot wire is pressed against a test piece. The test thus aims to investigate whether spread of flame can be prevented when a resin material to be used in the vicinity of a part having a risk of ignition is exposed to flame. In particular, regarding the glow wire ignition temperature, which is an index of safety of a product, the temperature required for connectors was changed from 725°C to 775°C according to the 4th edition of IEC60335-1 ("The safety of electrical appliances for household and similar purposes"), leading to requirement of techniques for higher flame retardancy. In addition, techniques for coloring connectors are now demanded for the purpose of connecting connectors having the same color to each other in order to prevent connection of the connectors to wrong places.

### PRIOR ART DOCUMENTS

Specific examples of techniques for obtaining good external appearances and a variety of colors include the following. As an example of a technique for giving excellent dispersibility to colorants, a composition containing: a colorant; a copolymer including as an essential component α,β-ethylenic unsaturated monomers having at least one carboxyl group; and a metal carboxylate; has been disclosed (see, for example, Patent Document 1).

On the other hand, as an example of a technique for obtaining high flame retardancy and moldability, a flame-retardant polyamide resin composition containing a triazine type flame retardant in an amount of 12 to 38 parts by mass with respect to 100 parts by mass of a polyamide resin having a particular structure, and a higher fatty acid metal salt and a carboxamide wax, has been disclosed (see, for example, Patent Document 2). Patent Document 3 describes preparation of a melamine cyanurate flame-retardant polyamide material which also contains SiO₂ and a metal oxide as synergistic flame retardants.
[Patent Document 1] JP 2-91160 A; [Patent Document 2] WO 2013/099522; and
[Patent Document 3] CN 103 408 750A

### SUMMARY OF THE INVENTION

In recent years, for coloring of molded articles such as connectors, a technique that achieves both flame retardancy (glow wire property) and a good external appearance has been demanded. However, Patent Document 1 is an invention of a dispersant, and does not describe at all whether a thermoplastic resin composition containing the dispersant has sufficient moldability and flame retardancy (glow wire property). Furthermore, in the technique described in Patent Document 1, cloudiness occurred on the surface of a molded article, resulting in deterioration of the external appearance of the product. In the resin composition described in Patent Document 2, a colorant is included merely as an example of an arbitrary component, and there is no description at all on improvement of flame retardancy (glow wire property) of the resin composition or the external appearance of a product by addition of the colorant. Thus, achievement of both flame retardancy (glow wire property) of the resin composition and a good external appearance of the product has been demanded.

In view of the above problems in conventional techniques, an object of the present invention is to provide a flame-retardant polyamide resin composition excellent in the product's external appearance, glow wire property, moldability, and mechanical property, which composition contains a colorant, and to provide a molded article containing the composition.

For solving the above problems, the polyamide resin composition of the present invention has the following constitution:
a polyamide resin composition comprising 15 to 45 parts by weight of a (B) triazine type compound, 0.01 to 4 parts by weight of a (C) colorant, and 0.01 to 2.0 parts by weight of a (D) dispersant with respect to 100 parts by weight of a (A) polyamide resin, wherein the (C) colorant has a 10% mass loss temperature of not less than 825°C in thermogravimetric analysis (TGA) according to the JIS K 7120 (1987) standard, the (D) dispersant has a 10% mass loss of not less than 360°C in thermogravimetric analysis (TGA) according to the JIS K 7120 (1987) standard, and the composition has a glow wire ignition temperature measured according to IEC 60695-2-13 of not less than 775°C.

The molded article of the present invention has the following constitution:
a molded article comprising the polyamide resin composition.

The polyamide resin composition of the present invention preferably contains the (D) dispersant and the (C) colorant at a weight ratio of (D)/(C) of 0.15 to 200.

In the polyamide resin composition of the present invention, the (D) dispersant preferably contains a higher fatty acid metal salt (D1) and/or a fatty acid amide type wax (D2).

In the polyamide resin composition of the present invention, the (D) dispersant preferably contains the higher fatty acid metal salt (D1) and the fatty acid amide type wax (D2) at a weight ratio of (D1)/(D2) = 80/20 to 20/80.

According to the flame-retardant polyamide resin composition of the present invention, a molded article having a good external appearance can be obtained while an excellent glow wire property, a good moldability, and a good mechanical property are maintained.

Embodiments of the present invention are described below. In the present invention, "weight" means "mass".

Examples of the (A) polyamide resin to be used in the present invention include polyamide resins obtained by polymerization of a lactam having a three or higher-membered ring, a polymerizable amino acid, or a diamine and a dibasic acid, or a mixture of these.

Specific examples of the (A) polyamide resin include polyamide resins obtained from a lactam such as ε-caprolactam, enantholactam, undecalactam, or dodecalactam; polyamide resins obtained from an amino acid such as aminocaproic acid, 7-aminoheptanoic acid, 8-aminooctanoic acid, 9-aminononanoic acid, 10-aminodecanoic acid, 11-aminoundecanoic acid, or 12-aminododecanoic acid; polyamide resins obtained from a diamine such as tetramethylenediamine, pentamethylenediamine, 2-methyl-1,5-diaminopentane, 3-methyl-1,5-diaminopentane, hexamethylenediamine, heptamethylenediamine, octamethylenediamine, nonamethylenediamine, decamethylenediamine, undecamethylenediamine, dodecamethylenediamine, o-xylylenediamine, m-xylylenediamine, p-xylylenediamine, 1,2-diaminocyclohexane, 1,3-diaminocyclohexane, or 1,4-diaminocyclohexane, and a dicarboxylic acid such as succinic acid, glutaric acid, adipic acid, pimelic acid, suberic acid, 1,7-heptanedicarboxylic acid, sebacic acid, 1,9-nonanedicarboxylic acid, 1,10-decanedicarboxylic acid, 1,11-undecanedicarboxylic acid, terephthalic acid, isophthalic acid, phthalic acid, 1,2-cyclohexanedicarboxylic acid, 1,3-cyclohexanedicarboxylic acid, or 1,4-cyclohexanedicarboxylic acid; and their arbitrary copolymers. Two or more of these may be mixed together.

From the viewpoint of the mechanical property, the glow wire property, and the moldability of the molded article, the (A) polyamide resin to be used in the present invention is preferably a (A1) polyamide 6/polyamide 66 copolymer resin (which may be hereinafter simply referred to as (A1)) at least containing a copolymer polyamide resin containing 50% by weight to 98% by weight (a1) caproamide units and 2% by weight to 50% by weight (a2) hexamethylene adipamide units.

The (A1) polyamide 6/polyamide 66 copolymer resin is more preferably a copolymer polyamide resin containing 70% by weight to 98% by weight (a1) caproamide units and 2% by weight to 30% by weight (a2) hexamethylene adipamide units, most preferably a copolymer polyamide resin containing 90% by weight to 97% by weight (a1) caproamide units and 3% by weight to 10% by weight (a2) hexamethylene adipamide units. By using a copolymer polyamide resin containing not less than 50% by weight (a1) caproamide units, a high mechanical property (toughness) of the molded article can be maintained, and a good external appearance can be obtained, even in cases where large amounts of the (B) triazine type compound and the (C) colorant are included. By using a copolymer polyamide resin containing not less than 2% by weight (a2) hexamethylene adipamide units, improved moldability can be achieved.

In the present invention, a (A2) polyamide 66/polyamide 6 copolymer resin (which may be hereinafter simply referred to as (A2)) containing 2% by weight to 50% by weight (a1) caproamide units and 50% by weight to 98% by weight (a2) hexamethylene adipamide units is more preferably contained. From the viewpoint of the mechanical property (toughness) and the moldability of the molded article, (al)/(a2) is preferably 30/70 to 2/98 (weight ratio), more preferably 10/90 to 2/98 (weight ratio). By the inclusion of (A2), an improved mechanical property (toughness) of the molded article can be achieved without deteriorating the glow wire property, and the good mechanical property (toughness) of the molded article can be maintained even in cases where large amounts of the (B) triazine type compound and the (C) colorant are included.

In cases where (A1) and (A2) are used in combination, the mixing ratio is not limited. For further improvement of the mechanical property (toughness), (A1)/(A2) is preferably 95/5 to 5/95 (weight ratio). (A1)/(A2) is more preferably 85/15 to 15/85 (weight ratio).

In the present invention, a (A3) polyhexamethylene adipamide resin (which may be hereinafter simply referred to as (A3)) may be included. From the viewpoint of the moldability, (A3) is preferably included in (A1). From the viewpoint of the mechanical property (toughness) and the moldability, (A3) is preferably included in (A1) and (A2). By the inclusion of (A3), an improved moldability and mechanical property (toughness) can be achieved without deteriorating the glow wire property.

In cases where (A1) and (A3) are used in combination, the mixing ratio of (A3) is not limited. For improvement of the moldability, (A1)/(A3) is preferably not more than 95/5 (weight ratio), more preferably not more than 90/10 (weight ratio). For obtaining a high mechanical property (toughness), the mixing ratio is preferably not less than 75/25 (weight ratio), more preferably not less than 80/20 (weight ratio).

In cases where (A1), (A2), and (A3) are included as the (A) polyamide resin, for further improvement of the moldability, (total weight of (A1) and (A2))/(A3) is preferably not more than 95/5 (weight ratio), more preferably not more than 90/10 (weight ratio). For obtaining a high mechanical property (toughness), this ratio is preferably not less than 75/25 (weight ratio), more preferably not less than 80/20 (weight ratio). Regarding (A1) and (A2), for further improvement of the mechanical property (toughness), (A1)/(A2) is preferably 95/5 to 5/95 (weight ratio). (A1)/(A2) is more preferably 85/15 to 15/85 (weight ratio).

The molecular weight of the (A) polyamide resin used in the present invention is not limited. From the viewpoint of fluidity of the resin composition obtained, the relative viscosity of a solution prepared by dissolving the resin at a concentration of 1 g/dL in 98% concentrated sulfuric acid, according to JIS K 6810, is preferably within the range of 1.8 to 5.0, more preferably within the range of 1.8 to 4.0, at 25°C. In cases where (A1), (A2), and (A3) are used as the (A) polyamide resin, the relative viscosity of each polyamide resin preferably satisfies this range.

The method for preparing the (A) polyamide resin to be used in the present invention is not limited. A desired polyamide resin can be obtained by, for example, allowing condensation of the above-described lactam having a three or higher-membered ring, the polymerizable amino acid, or the diamine and the dibasic acid, or a mixture thereof in a polymerization tank under pressure at high temperature to produce oligomers, and then allowing polymerization to proceed under reduced pressure to achieve an appropriate melt viscosity. Commercially available products, of course, may also be used.

In the present invention, 15 to 45 parts by weight (not less than 15 parts by weight and not more than 45 parts by weight) of the (B) triazine type compound is included with respect to 100 parts by weight of the (A) polyamide resin. (B) In cases where the amount of the triazine type compound included is less than 15 parts by weight, the glow wire property of the molded article is deteriorated. The amount is preferably not less than 15 parts by weight, more preferably not less than 20 parts by weight. On the other hand, in cases where the amount of the triazine type compound included is more than 45 parts by weight, the mechanical property (toughness) of the molded article is deteriorated. The amount is preferably not more than 40 parts by weight, more preferably 35 parts.

In the present invention, the (B) triazine type compound means a compound having a triazine skeleton, which contains three nitrogen atoms and has an unsaturated six-membered ring structure. (B) Triazine type compounds are known as flame retardants capable of giving flame retardancy to thermoplastic resins when they are included in the resins. Specific examples of the compounds include melamine, melem, melam, and melon; their salts with cyanuric acid; cyanuric acid; and mixtures of these. From the viewpoint of heat resistance and the mixing property with polyamide resins, melamine cyanurate is especially preferred. The average particle size of the (B) triazine type compound is preferably not more than 15 µm. In cases where the average particle size is not more than 15 µm, an improved mechanical property (toughness) can be achieved. The average particle size is the volume type particle size calculated from values obtained by measurement according to JIS K 5600-9-3 (2006).

The (B) triazine type compound may be MC25 (melamine cyanurate), manufactured by Italmatch Chemicals Spa; MC4000 (melamine cyanurate) or MC6000 (melamine cyanurate), manufactured by Nissan Chemical Corporation; or the like.

From the viewpoint of the product's external appearance and the glow wire property, the (C) colorant to be used in the present invention has a 10% mass loss temperature of not less than 825°C in the thermogravimetric analysis (TGA) described in the JIS K 7120 (1987) standard. The upper limit of the decomposition temperature is not limited, and is preferably not more than the boiling point of the colorant at normal pressure. In cases where the 10% mass loss temperature of the colorant is less than 825°C, the glow wire ignition temperature is low, and cloudiness and silver streaks occur on the surface of the product, resulting in a poor external appearance. In a colorant having a 10% mass loss temperature of less than 825°C, thermal decomposition within the glow wire test temperature region (775°C) occurs to cause production of a flammable gas or exothermic reaction, resulting in deterioration of the glow wire property. The 10% mass loss temperature in the thermogravimetric analysis (TGA) is measured as follows. According to the JIS K 7120 (1987) standard, the (C) colorant as a sample is subjected to measurement at measurement temperatures of from 40°C to 850°C at a heating rate of 20°C/minute. The temperature at which the sample weight decreases by 10% by weight is defined as the 10% mass loss temperature. As the inflowing gas to be used for the measurement, nitrogen gas is used, and the flow rate is set to 200 mL/minute.

Examples of the colorant generally include dyes such as natural dyes and synthetic dyes; inorganic pigments; and organic pigments. The (C) colorant to be used in the present invention having a 10% mass loss temperature of not less than 825°C in thermogravimetric analysis (TGA) include inorganic pigments such as red iron oxide, black iron oxide, titanium yellow, chrome yellow, ultramarine, ultramarine blue, titanium dioxide, zinc oxide, zinc sulfide, chromium oxide, sodium carbonate, yellow iron oxide, silicic acid metal salts, silica, alumina, and other metal oxides. Two or more of these may be used.

The content of the (C) colorant with respect to 100 parts by weight of the (A) polyamide resin is 0.01 to 4 parts by weight (not less than 0.01 parts by weight and not more than 4 parts by weight). In cases where the content of (C) is less than 0.01 parts by weight, coloring of the molded article is insufficient. The content is preferably not less than 0.05 parts by weight. On the other hand, in cases where the content of (C) is more than 4 parts by weight, the mechanical property (toughness) is deteriorated. The content is preferably not more than 3 parts by weight.

From the viewpoint of the product's external appearance and the glow wire property, the (D) dispersant to be used in the present invention has a 10% mass loss temperature of not less than 360°C in the thermogravimetric analysis (TGA) described in the JIS K 7120 (1987) standard. The upper limit of the decomposition temperature is not limited, and is preferably not more than the boiling point of the dispersant at normal pressure. In cases where the 10% mass loss temperature of the (D) dispersant is less than 360°C, deterioration of the mechanical property (toughness) or the moldability occurs due to decomposition of the polyamide resin. Further, lowering of the glow wire ignition temperature, and deterioration of the external appearance due to occurrence of cloudiness and silver streaks on the surface of the molded article occur. The 10% mass loss temperature in the thermogravimetric analysis (TGA) is measured using the method described above. The value "360°C" is an empirical value, and details of the action mechanism of the (D) dispersant in the present invention are unclear at present. It is assumed that this value is associated with the decomposition temperature of the (D) dispersant. In other words, it is assumed that, in cases where the decomposition temperature of the (D) dispersant is lower than the decomposition temperature of the (A) polyamide resin, decomposition of the dispersant occurs prior to decomposition of the polyamide resin in the glow wire ignition temperature test, leading to a low glow wire ignition temperature. This effect is remarkable in cases where the content of the (D) dispersant exceeds the later-described content (that is, in cases where the content is high).

Examples of the (D) dispersant used in the present invention having a 10% mass loss temperature of not less than 360°C in thermogravimetric analysis (TGA) include (D1) higher fatty acid metal salts, (D2) carboxamide waxes, and fatty acid polyester type waxes. In particular, use of a (D1) higher fatty acid metal salt and/or a (D2) carboxamide wax is preferred. Use of a (D1) higher fatty acid metal salt is more preferred. Combined use of a (D1) higher fatty acid metal salt and a (D2) carboxamide wax is still more preferred. By the inclusion of (D1), a high glow wire ignition temperature can be obtained, and moreover, the external appearance of the molded article can be improved. By the combined use of (D1) and (D2), a high glow wire ignition temperature can be obtained, and moreover, the external appearance of the molded article can be improved, and the moldability can also be improved.

Examples of the (D1) higher fatty acid metal salt include salts of an aliphatic carboxylic acid or a hydroxycarboxylic acid having not less than 12 carbon atoms with a metal ion. Specific examples of the (D1) higher fatty acid metal salt include salts of an aliphatic carboxylic acid or a hydroxycarboxylic acid such as lauric acid, myristic acid, palmitic acid, stearic acid, behenic acid, cerotic acid, oleic acid, erucic acid, or 12-hydroxystearic acid, with a metal ion such as lithium, calcium, barium, or magnesium. Among these, lithium stearate, calcium stearate, and alkaline complex soap are preferred. From the viewpoint of the moldability and the mechanical property (toughness), lithium stearate and calcium stearate are preferred. The (D1) higher fatty acid metal salt may be, for example, Li-St (lithium stearate), manufactured by NITTO CHEMICAL INDUSTRY CO., LTD.

Examples of the (D2) carboxamide wax include compounds prepared by polycondensation of an aliphatic carboxylic acid, hydroxycarboxylic acid, and/or polybasic acid, with a diamine.

Examples of the aliphatic carboxylic acid or the hydroxycarboxylic acid to be used for the (D2) carboxamide wax include lauric acid, myristic acid, palmitic acid, stearic acid, behenic acid, cerotic acid, montanic acid, melissic acid, oleic acid, erucic acid, and 12-hydroxystearic acid.

Examples of the polybasic acid to be used for the carboxamide wax (D2) include oxalic acid, malonic acid, succinic acid, glutamic acid, adipic acid, pimelic acid, azelaic acid, sebacic acid, 1,10-decanedicarboxylic acid, phthalic acid, terephthalic acid, cyclohexanedicarboxylic acid, and cyclohexylsuccinic acid.

The diamine to be used for the carboxamide wax (D2) include ethylenediamine, 1,3-propanediamine, 1,4-butanediamine, hexamethylenediamine, metaxylenediamine, tolylenediamine, paraxylenediamine, phenylenediamine, isophoronediamine, 1,10-decanediamine, 1,12-dodecanediamine, 4,4-diaminodicyclohexylmethane, and 4,4-diaminodiphenylmethane. Among these, from the viewpoint of the moldability, a polycondensate of ethylenediamine and sebacic acid/stearic acid is preferred. Two or more of these may be used.

The (D2) carboxamide wax is preferably WH215 (polycondensate of ethylenediamine and sebacic acid/stearic acid) or WH255 (polycondensate of ethylenediamine and sebacic acid/stearic acid), manufactured by KYOEISHA CHEMICAL CO., LTD. WH255 is more preferred because of its higher heat resistance.

Examples of the fatty acid polyester type waxes include compounds obtained by esterification reaction between an aliphatic carboxylic acid or a hydroxycarboxylic acid and an alcohol or a polyol.

Examples of the aliphatic carboxylic acid and the hydroxycarboxylic acid to be used for the fatty acid ester type waxes include lauric acid, myristic acid, palmitic acid, stearic acid, behenic acid, cerotic acid, oleic acid, erucic acid, and 12-hydroxystearic acid.

Examples of the alcohol and the polyol to be used for the fatty acid polyester type waxes include methanol, ethanol, propanol, pentaerythritol, and dipentaerythritol.

By combined use of (D1) and (D2), an excellent glow wire property and moldability, and excellent dispersibility of the (C) colorant can be obtained. The mixing ratio (D1)/(D2), in terms of the weight ratio, is preferably 20/80 to 80/20, more preferably 30/70 to 70/30, most preferably 40/60 to 60/40.

The content of the (D) dispersant with respect to 100 parts by weight of the (A) polyamide resin is 0.01 to 2.0 parts by weight (not less than 0.01 parts by weight and not more than 2.0 parts by weight). In cases where (D1) and (D2) are contained as the (D) dispersant, the total amount of (D1) and (D2) is regarded as the content of the (D) dispersant. In cases where the content of (D) is less than 0.01 parts by weight, the mechanical property (toughness) and the moldability are deteriorated, and cohesion aggregates of (C) are generated in the molded article. The content is preferably not less than 0.05 parts by weight, more preferably not less than 0.10 parts by weight. On the other hand, in cases where the content of (D) is more than 2.0 parts by weight, the glow wire property of the molded article is deteriorated, and the mechanical property (toughness) is also deteriorated. The content is preferably not more than 1.5 parts by weight.

From the viewpoint of increasing dispersibility of the (C) colorant, and obtaining an excellent product's external appearance, the weight ratio (D)/(C) between the content of the (D) dispersant and the content of the (C) colorant is preferably not less than 0.15. The weight ratio is more preferably not less than 0.25, still more preferably not less than 0.5. From the viewpoint of obtaining a favorable color developing property of the colorant, (D)/(C) is preferably not more than 200, more preferably not more than 100. (D)/(C) is preferably not more than 30, more preferably not more than 10, still more preferably not more than 5.

For coloring of a resin, a colorant is used. When a colorant is simply included in a polyamide resin composition containing a flame retardant, the glow wire property is deteriorated. Moreover, cohesion of the colorant causes appearance of color spots on the surface of the molded article, resulting in a poor external appearance. Even in cases where a dispersant is simply used for stably dispersing the colorant, a molded article requiring high flame retardancy (glow wire property) shows production of a gas due to thermal decomposition of the (C) colorant or the (D) dispersant, causing cloudiness on the surface of the molded article. The present inventors studied on its cause to discover that, even in cases where a flame retardant is contained, combination of a particular colorant with a particular dispersant enables coloring without deterioration of the external appearance of the molded article while the glow wire property is maintained. More specifically, the present inventors discovered that improvement of both the flame retardancy (glow wire property) and the external appearance of the molded article can be achieved by using the polyamide resin composition of the present invention, which uses the (B) flame retardant, the particular (C) colorant, and the particular (D) dispersant. In particular, by setting the weight ratio (D)/(C) between the (D) dispersant and the (C) colorant to preferably 0.15 to 200, cohesion of the colorant can be suppressed, and cloudiness of the molded article can also be suppressed.

As long as the object of the present invention is not deteriorated, the polyamide resin composition of the present invention may also contain one or more of ordinary additives such as other polymers; copper-containing thermal stabilizers; antioxidants, for example, hindered phenol-containing, phosphorus-containing, or sulfur-containing antioxidants; thermal stabilizers; ultraviolet absorbers; antistatic agents; and colorants including dyes and pigments.

The method for producing the polyamide resin composition of the present invention is not limited, and examples of the method include a method in which melt-kneading is carried out using a kneading machine such as a single-screw or twin-screw extruder or a kneader at a temperature of 220°C to 330°C. Since a flame retardant such as a (B) triazine type compound shows a higher flame-retardant effect as the dispersibility of the flame retardant increases, the flame retardant is preferably included at the same time as the resin component in the production method.

From the polyamide resin composition described in the present invention, a molded article having an excellent glow wire property can be obtained. More specifically, a molded article having a glow wire ignition temperature of not less than 775°C as measured by the test method described in IEC 60695-2-13 can be obtained. The glow wire ignition temperature, which is called GW-IT (Glow Wire Ignition Temperature), means the lowest wire temperature at which the burning time is not less than 5 seconds when a wire heated to a particular temperature is pressed against a resin molded article.

The glow wire ignition temperature required by the 4th edition of IEC 60335-1 is not less than 775°C. However, for connector members to satisfy the required glow wire ignition temperature (Glow Wire Test), that is, not less than 750°C, described in IEC 60695-2-11 intended for products having more complex shapes, the glow wire ignition temperature is preferably not less than 800°C, more preferably not less than 825°C, most preferably not less than 850°C.

### EXAMPLES

The present invention is described below in detail by way of Examples. However, the present invention is not limited by these. The measurement methods used in the Examples and the Comparative Examples were as follows.

### (1) Glow Wire Ignition Temperature (3-mm Thickness)

The pellets obtained in each of the Examples and the Comparative Examples were subjected to injection molding using an injection molding machine NEX1000, manufactured by NISSEI PLASTIC INDUSTRIAL CO., LTD., to prepare a test piece of 80 mm × 80 mm × 3 mm under the following conditions: cylinder temperature, 280°C; mold surface temperature, 80°C; screw rotation speed, 130 rpm; injection pressure, 100 MPa; injection speed, 100 mm/second; injection time/cooling time = 20/20 seconds. Using the test piece obtained, the glow wire ignition temperature (GW-IT) was measured according to IEC 60695-2-13, and the test piece was judged as acceptable in cases where GW-IT was not less than 775°C.

### (2) Mechanical Property (Toughness)

According to ISO 1874-2, the pellets obtained in each of the Examples and the Comparative Examples were subjected to injection molding using an injection molding machine NEX1000, manufactured by NISSEI PLASTIC INDUSTRIAL CO., LTD., to prepare a test piece in accordance with the ISO Type-A standard under the following conditions: cylinder temperature, 280°C; mold surface temperature, 80°C; screw rotation speed, 150 rpm; injection velocity in the parallel portion of the molded article, 200 mm/second; injection time/cooling time = 20/20 seconds.

### (a) Tensile Elongation at Break (Under Absolute Dry)

The test piece obtained by the above method was packed under vacuum in an aluminum moisture-proof bag. Using this test piece, the tensile elongation at break was measured according to the following standard method. The test piece was judged as having excellent toughness in cases where the tensile elongation at break (under dry conditions) was not less than 3.5%.

Tensile elongation at break: ISO 527-1, 527-2

### (3) Mold Release Property

The pellets obtained in each of the Examples and the Comparative Examples were subjected to injection molding using an injection molding machine NEX1000, manufactured by NISSEI PLASTIC INDUSTRIAL CO., LTD., to prepare a box-shaped molded article of 25 mm × 25 mm × 25 mm with a thickness of 1 mm, under the following conditions: cylinder temperature, 280°C; mold surface temperature, 80°C; screw rotation speed, 150 rpm; injection pressure, 100 MPa; injection speed, 100 mm/second; injection time/cooling time = 10/10 seconds. The load on the ejector plate exerted upon the mold release was measured using a load cell, and the resulting value was regarded as the mold release force. The molded article was rated as acceptable in cases where the mold release force was not more than 350 N.

### (4) Product Appearance Test

The pellets obtained in each of the Examples and the Comparative Examples were introduced into an injection molding machine NEX1000, manufactured by NISSEI PLASTIC INDUSTRIAL CO., LTD., to prepare a square plate of 90 mm (length) × 50 mm (width) × 3 mm (thickness) with a side gate of 5 mm × 2 mm under the following conditions: cylinder temperature, 280°C; mold surface temperature, 80°C; screw rotation speed, 150 rpm; injection pressure, 100 MPa; injection speed, 100 mm/second; injection time/cooling time = 20/20 seconds.

### (a) Number of Cohesion Aggregates

Each of 10 test pieces obtained by the above method was visually observed to investigate the number of cohesion aggregates of the pigment, and rating was carried out according to the following standard.

Good: 0 or 1 cohesion aggregate
Fair: 1 to 5 cohesion aggregates
Poor: 6 or more cohesion aggregates

### (b) Product Appearance Conditions

The surface of each of 5 test pieces obtained by the above method was visually observed, and rating was carried out according to the following standard. "Cloudiness" means the phenomenon that color change partially occurs on the surface of the molded article due to production of a gas. "Silver streak" means the phenomenon that a poor external appearance occurs due to roughness of the surface of the molded article caused by production of a gas.

Good: No cloudiness or silver streaks on the surface of the molded article
Poor: Finding of either cloudiness or silver streaks on the surface of the molded article

### (5) Thermogravimetric Analysis (TGA)

According to the JIS K 7120 (1987) standard, measurement was carried out with a sample mass of 2.5 to 3.5 mg at measurement temperatures of from 40°C to 850°C at a heating rate of 20°C/minute. The temperature at which the sample weight decreased by 10% by weight was defined as the 10% mass loss temperature. As the inflowing gas to be used for the measurement, nitrogen gas was used, and the flow rate was set to 200 mL/minute.

### Reference Example 1 (A1) Polyamide 6/Polyamide 66 Copolymer Resin

In pure water, 95.0 parts by weight of ε-caprolactam and 5.0 parts by weight of the salt of hexamethylenediamine and adipic acid were dissolved, and 1 part by weight of water was added thereto to provide a raw material to be polymerized. The raw material obtained was sent to a polymerization tower. While the temperature of the polymerization tower was controlled by heating with heaters attached to the top portion, middle portion, and bottom portion of the polymerization tower, reaction of the raw material was allowed to proceed. The polymer discharged into a water bath was pelletized using a strand cutter, and the obtained pellets were subjected to hot water extraction at 95°C for 20 hours at a liquor ratio of 20 to remove unreacted raw material and oligomers. After the extraction, the resulting product was subjected to vacuum drying at 80°C for 30 hours, to obtain a (A1) copolymer polyamide resin. The relative viscosity in 98% sulfuric acid according to JIS K 6810 was 2.75. The polyamide 6/polyamide 66 ratio in (A1) was 95% by weight/5% by weight.

### Reference Example 2 (A2) Polyamide 66/Polyamide 6 Copolymer Resin

To a polymerization tank, 3.0 parts by weight of ε-caprolactam and 97.0 parts by weight of the salt of hexamethylenediamine and adipic acid were fed, and water was added thereto such that the water content was 45 parts by weight. After replacement of the atmosphere in the polymerization tank with nitrogen, the temperature was increased to 260°C. Subsequently, polymerization was allowed to proceed while the pressure was kept at 1.7 MPa for 1 hour, and the resulting product was discharged and cut to obtain a (A2) copolymer polyamide resin. The relative viscosity in 98% sulfuric acid according to JIS K 6810 was 2.60. The polyamide 66/polyamide 6 ratio in (A2) was 97% by weight/3% by weight.

### Reference Example 3 (A3) Polyhexamethylene Adipamide Resin

Polyamide 66 ("Amilan" (registered trademark) CM3001N, manufactured by Toray Industries, Inc.; relative viscosity in 98% sulfuric acid, 3.0) Reference Example 4 (B1) Triazine type Compound
MC25 (melamine cyanurate), manufactured by Italmatch Chemicals Spa, was used. The average particle size (volume average) measured according to JIS K 5600-9-3 was 4 µm.

### Reference Example 5

(C1) MR-120 (red iron oxide), manufactured by MORISHITA BENGARA KOGYO CO., LTD, was used. Its 10% mass loss temperature was not less than 850°C.

### Reference Example 6

(C2) TY-70 (titanium yellow), manufactured by ISHIHARA SANGYO KAISHA, LTD., was used. Its 10% mass loss temperature was not less than 850°C.

### Reference Example 7

(C3) MR-970D (black iron oxide), manufactured by MORISHITA BENGARA KOGYO CO., LTD, was used. Its 10% mass loss temperature was not less than 850°C.

### Reference Example 8

(C4) MITSUBISHI Carbon Black #25 (carbon black), manufactured by Mitsubishi Chemical Corporation, was used. Its 10% mass loss temperature was 344°C.

### Reference Example 9

(C5) C. I. No. Solvent Black 5 was used. Its 10% mass loss temperature was 378°C.

### Reference Example 10

(D1-1) Ca-St (calcium stearate), manufactured by NITTO CHEMICAL INDUSTRY CO., LTD., was used. Its 10% mass loss temperature was 421°C.

### Reference Example 11

(D1-2) Li-St (lithium stearate), manufactured by NITTO CHEMICAL INDUSTRY CO., LTD., was used. Its 10% mass loss temperature was 465°C.

### Reference Example 12

(D1-3) HRC-12 (alkaline complex soap), manufactured by NITTO CHEMICAL INDUSTRY CO., LTD., was used. Its 10% mass loss temperature was 470°C.

### Reference Example 13

(D1-4) Zn-St (zinc stearate), manufactured by NITTO CHEMICAL INDUSTRY CO., LTD., was used. Its 10% mass loss temperature was 350°C.

### Reference Example 14 (D2-1) Carboxamide Wax

WH215 (a polycondensate of ethylenediamine and sebacic acid/stearic acid), manufactured by KYOEISHA CHEMICAL CO., LTD., was used. Its 10% mass loss temperature was 369°C.

### Reference Example 15 (D2-2) Carboxamide Wax

WH255 (a polycondensate of ethylenediamine and sebacic acid/stearic acid), manufactured by KYOEISHA CHEMICAL CO., LTD., was used. Its 10% mass loss temperature was 367°C.

### Reference Example 16 (D2-3) Carboxamide Wax

Kao Wax EB-G (ethylene bis stearamide), manufactured by Kao Corporation, was used. Its 10% mass loss temperature was 359°C.

### Reference Example 17 (F-1) Brominated Polystyrene (Flame Retardant)

SAYTEX HP-3010G (brominated polystyrene), manufactured by Albemarle Corporation, was used.

### [Examples 1 to 24]

A (A) polyamide resin(s), a (B) triazine type compound, a (C) colorant, and a (D) dispersant(s) were mixed in the amounts shown in Tables 1 and 2, and fed to a twin-screw extruder (TEX30α, manufactured by THE JAPAN STEEL WORKS LTD.) by top feeding. Melt kneading was carried out under the following conditions: cylinder set temperature, 280°C; output, 40 kg/hour; screw rotation speed, 250 rpm. The resulting molded strand-shaped gut was cooled in a cooling bath, and then granulated using a cutter to obtain pellets. The obtained pellets were used for investigation of properties by the above evaluation methods. The results are shown in Tables 1 and 2.

### [Comparative Examples 1 to 12]

A (A) polyamide resin, a (B) triazine type compound, a (C) colorant, a (D) dispersant(s), and (F) another additive were mixed in the amounts shown in Table 3, and fed to a twin-screw extruder (TEX30α, manufactured by THE JAPAN STEEL WORKS LTD.) by top feeding. Melt kneading was carried out under the following conditions: cylinder set temperature, 280°C; output, 40 kg/hour; screw rotation speed, 250 rpm. The resulting molded strand-shaped gut was cooled in a cooling bath, and then granulated using a cutter to obtain pellets. The obtained pellets were used for investigation of properties by the above evaluation methods. The results are shown in Table 3.

**[Table 1]**

| | | Content | Ex1 | Ex2 | Ex3 | Ex4 | Ex5 | Ex6 | Ex7 | Ex8 | Ex9 | Ex10 | Ex11 | Ex12 |
|---|---|---|---|---|---|---|---|---|---|---|---|---|---|---|
| (A) Polyamide resin | (A1) Polyamide 6/66 | parts by wt. | 100 | 100 | 100 | 100 | 100 | 100 | 100 | 100 | 100 | 100 | 100 | 100 |
| | (A2) Polyamide 66/6 | parts by wt. | | | | | | | | | | | | |
| | (A3) Polyamide 66 | parts by wt. | | | | | | | | | | | | |
| (B) Triazine type compound | (B1) Melaminecyanurate | parts by wt. | 30 | 30 | 30 | 30 | 30 | 30 | 30 | 30 | 30 | 30 | 30 | 30 |
| (C) Colorant | (C1) Colcothar (10% wt. loss temp.: 850°C<) | parts by wt. | 2 | | | 2 | 2 | 4 | 0.01 | 2 | 2 | 2 | 2 | 2 |
| | (C2) Titan yellow (10% wt. loss temp.: 850°C<) | parts by wt. | | 2 | | | | | | | | | | |
| | (C3) Black iron oxide (10% wt loss temp.: 850°C<) | parts by wt. | | | 2 | | | | | | | | | |
| | (C4) Carbon black (10% wt. loss temp.: 344°C) | parts by wt. | | | | | | | | | | | | |
| | (C5) Solvent Black 5 (10% wt. loss temp.: 378°C) | parts by wt. | | | | | | | | | | | | |
| (D) Dispersant | (D1-1) Calcium stearate (10% wt. loss temp.: 421°C) | parts by wt. | 0.5 | 0.5 | 0.5 | 1.0 | | 0.5 | 0.5 | 0.3 | 0.2 | 0.8 | 0.7 | 0.1 |
| | (D1-2) Lithium stearate (10% wt. loss temp.: 465°C) | parts by wt. | | | | | | | | | | | | |
| | (D1-3) Alkaline complex soap (10% wt. loss temp.: 470°C) | parts by wt. | | | | | | | | | | | | |
| | (D2-1) Carboxylic amide wax (10% wt. loss temp.: 369°C) | parts by wt. | 0.5 | 0.5 | 0.5 | | 1.0 | 0.5 | 0.5 | 0.7 | 0.8 | 0.2 | 0.7 | 0.1 |
| | (D2-2) Carboxylic amide wax (10% wt. loss temp.: 367°C) | parts by wt. | | | | | | | | | | | | |
| | (D1-4) Zinc stearate (10% wt. loss temp.: 350°C) | parts by wt. | | | | | | | | | | | | |
| | (D2-3) Carboxylic amide wax (10% wt. loss temp.: 359°C) | parts by wt. | | | | | | | | | | | | |
| (F) Other additive agent | (F1) Brominated polystyrene | parts by wt. | | | | | | | | | | | | |
| (D)/(C) | | | 0.5 | 0.5 | 0.5 | 0.5 | 0.5 | 0.3 | 100.0 | 0.5 | 0.5 | 0.5 | 0.7 | 0.1 |
| Evaluation results | Glow Wire Ignition Temperature (3mm-thick) | °C | 850 | 850 | 850 | 850 | 775 | 850 | 850 | 850 | 825 | 850 | 850 | 850 |
| | Tensile Elongation at Break (under absolute dry) | % | 4.5 | 4.5 | 4.5 | 3.8 | 4.5 | 4.0 | 6.5 | 4.5 | 4.5 | 4.0 | 4.5 | 4.5 |
| | Mold Release Force | N | 40 | 40 | 40 | 335 | 60 | 40 | 45 | 48 | 60 | 150 | 35 | 65 |
| | Product Appearance Test / Number of Cohesion Aggregates | - | good | good | good | fair | fair | good | good | good | good | good | good | fair |
| | Product Appearance Test / Surface Condition of Molded Article | - | good | good | good | good | good | good | good | good | good | good | good | good |

**[Table 2]**

| | | Content | Ex13 | Ex14 | Ex15 | Ex16 | Ex17 | Ex18 | Ex19 | Ex20 | Ex21 | Ex22 | Ex23 | Ex24 |
|---|---|---|---|---|---|---|---|---|---|---|---|---|---|---|
| (A) Polyamide resin | (A1) Polyamide 6/66 | parts by wt. | 100 | 100 | 100 | 85 | 85 | 95 | 75 | 100 | 100 | 100 | 100 | 70 |
| | (A2) Polyamide 66/6 | parts by wt. | | | | 15 | | | | | | | | 15 |
| | (A3) Polyamide 66 | parts by wt. | | | | | 15 | 5 | 25 | | | | | 15 |
| (B) Triazine type compound | (B1) Melaminecyanurate | parts by wt. | 20 | 40 | 15 | 30 | 30 | 30 | 30 | 30 | 30 | 30 | 30 | 30 |
| (C) Colorant | (C1) Colcothar (10% wt. loss temp.: 850°C<) | parts by wt. | 2 | 2 | 2 | 2 | 2 | 2 | 2 | 2 | 2 | 2 | 2 | 2 |
| | (C2) Titan yellow (10% wt. loss temp.: 850°C<) | parts by wt. | | | | | | | | | | | | |
| | (C3) Black iron oxide (10% wt. loss temp.: 850°C<) | parts by wt. | | | | | | | | | | | | |
| | (C4) Carbon black (10% wt. loss temp.: 344°C) | parts by wt. | | | | | | | | | | | | |
| | (C5) Solvent Black 5 (10% wt. loss temp.: 378°C) | parts by wt. | | | | | | | | | | | | |
| (D) Dispersant | (D1-1) Calcium stearate (10% wt. loss temp.: 421°C) | parts by wt. | 0.5 | 0.5 | 0.5 | 0.5 | 0.5 | 0.5 | 0.5 | | | 0.5 | 0.2 | 0.5 |
| | (D1-2) Lithium stearate (10% wt. loss temp.: 465°C) | parts by wt. | | | | | | | | | 0.5 | | | |
| | (D1-3) Alkaline complex soap (10% wt. loss temp.: 470°C) | parts by wt. | | | | | | | | 0.5 | | | | |
| | (D2-1) Carboxylic amide wax (10% wt. loss temp.: 369°C) | parts by wt. | 0.5 | 0.5 | 0.5 | 0.5 | 0.5 | 0.5 | 0.5 | 0.5 | 0.5 | | 0.2 | 0.5 |
| | (D2-2) Carboxylic amide wax (10% wt. loss temp.: 367°C) | parts by wt. | | | | | | | | | | 0.5 | | |
| | (D1-4) Zinc stearate (10% wt. loss temp.: 350°C) | parts by wt. | | | | | | | | | | | | |
| | (D2-3) Carboxylic amide wax (10% wt. loss temp.: 359°C) | parts by wt. | | | | | | | | | | | | |
| (F) Other additive agent | (F1) Brominated polystyrene | parts by wt. | | | | | | | | | | | | |
| (D)/(C) | | | 0.5 | 0.5 | 0.5 | 0.5 | 0.5 | 0.5 | 0.5 | 0.5 | 0.5 | 0.5 | 0.2 | 0.5 |
| Evaluation results | Glow Wire Ignition Temperature (3mm-thick) | °C | 850 | 850 | 825 | 850 | 850 | 850 | 850 | 850 | 850 | 850 | 850 | 850 |
| | Tensile Elongation at Break (under absolute dry) | % | 4.6 | 4.0 | 4.6 | 4.8 | 4.6 | 4.6 | 4.1 | 4.3 | 4.5 | 4.5 | 4.5 | 4.9 |
| | Mold Release Force | N | 40 | 40 | 40 | 38 | 30 | 35 | 30 | 42 | 40 | 42 | 40 | 30 |
| | Product Appearance Test / Number of Cohesion Aggregates | - | good | good | good | good | good | good | good | good | good | good | good | good |
| | Product Appearance Test / Surface Condition of Molded Article | - | good | good | good | good | good | good | good | good | good | good | good | good |

**[Table 3]**

| | | Content | CE1 | CE2 | CE3 | CE4 | CE5 | CE6 | CE7 | CE8 | CE9 | CE10 | CE11 | CE12 |
|---|---|---|---|---|---|---|---|---|---|---|---|---|---|---|
| (A) Polyamide resin | (A1) Polyamide 6/66 | parts by wt. | 100 | 100 | 100 | 100 | 100 | 100 | 100 | 100 | 100 | 100 | 100 | 100 |
| | (A2) Polyamide 66/6 | parts by wt. | | | | | | | | | | | | |
| | (A3) Polyamide 66 | parts by wt. | | | | | | | | | | | | |
| (B) Triazine type compound | (B1) Melaminecyanurate | parts by wt. | 30 | 30 | 30 | 30 | 30 | 30 | 30 | 10 | 50 | | | 15 |
| (C) Colorant | (C1) Colcothar (10% wt. loss temp.: 850°C<) | parts by wt. | | | 2 | 2 | 6 | 2 | 2 | 2 | 2 | 2 | 2 | 2 |
| | (C2) Titan yellow (10% wt. loss temp.: 850°C<) | parts by wt. | | | | | | | | | | | | |
| | (C3) Black iron oxide (10% wt. loss temp.: 850°C<) | parts by wt. | | | | | | | | | | | | |
| | (C4) Carbon black (10% wt. loss temp.: 344°C) | parts by wt. | 2 | | | | | | | | | | | |
| | (C5) Solvent Black 5 (10% wt. loss temp.: 378°C) | parts by wt. | | 2 | | | | | | | | | | |
| (D) Dispersant | (D1-1) Calcium stearate (10% wt. loss temp.: 421°C) | parts by wt. | 0.5 | 0.5 | | | 0.5 | 1.3 | | 0.5 | 0.5 | 0.5 | 0.2 | |
| | (D1-2) Lithium stearate (10% wt. loss temp.: 465°C) | parts by wt. | | | | | | | | | | | | |
| | (D1-3) Alkaline complex soap (10% wt. loss temp.: 470°C) | parts by wt. | | | | | | | | | | | | |
| | (D2-1) Carboxylic amide wax (10% wt. loss temp.: 369°C) | parts by wt. | 0.5 | 0.5 | | | 0.5 | 1.3 | | 0.5 | 0.5 | 0.5 | 0.2 | |
| | (D2-2) Carboxylic amide wax (10% wt. loss temp.: 367°C) | parts by wt. | | | | | | | | | | | | |
| | (D1-4) Zinc stearate (10% wt. loss temp.: 350°C) | parts by wt. | | | 1.0 | | | | | | | | | |
| | (D2-3) Carboxylic amide wax (10% wt. loss temp.: 359°C) | parts by wt. | | | | 1.0 | | | | | | | | |
| (F) Other additive agent | (F1) Brominated polystyrene | parts by wt. | | | | | | | | | | 15 | | |
| (D)/(C) | | | 0.5 | 0.5 | 0.5 | 0.5 | 0.2 | 1.3 | 0.0 | 0.5 | 0.5 | 0.5 | 0.2 | 0.0 |
| Evaluation results | Glow Wire Ignition Temperature (3mm-thick) | °C | <775 | <775 | <775 | <775 | 850 | <775 | 825 | <775 | 850 | <775 | <775 | 775 |
| | Tensile Elongation at Break (under absolute dry) | % | 4.5 | 4.5 | 3.3 | 4.5 | 3.4 | 3.0 | 3.0 | 4.6 | 3.0 | 3.5 | >10 | 3.0 |
| | Mold Release Force | N | 40 | 40 | >360 | 150 | 40 | 35 | >360 | 40 | 40 | >360 | >360 | >360 |
| | Product Appearance Test / Number of Cohesion Aggregates | - | good | good | fair | fair | good | good | bad | good | good | good | fair | bad |
| | Product Appearance Test / Surface Condition of Molded Article | - | bad | bad | bad | bad | good | bad | good | good | bad | bad | good | good |

By comparison between Examples 1 to 24 and Comparative Examples 1 to 12, it can be seen that a polyamide resin composition containing 15 to 45 parts by weight of a (B) triazine type compound, 0.01 to 4 parts by weight of a (C) colorant having a 10% mass loss temperature of not less than 825°C in thermogravimetric analysis (TGA), and 0.01 to 2.0 parts by weight of a (D) dispersant having a 10% mass loss temperature of not less than 360°C in thermogravimetric analysis (TGA) with respect to 100 parts by weight of a (A) polyamide resin has an excellent product's external appearance, glow wire property, moldability, and mechanical property.

### INDUSTRIAL APPLICABILITY

The polyamide resin composition of the present invention can be easily molded by an ordinary method such as injection molding, extrusion molding, or blow molding. The molded article obtained has an excellent product's external appearance, moldability, glow wire property, and mechanical property (toughness), and suitable for electric/electronic parts, automobile parts, housings, external parts, and connectors. Moreover, since the composition is especially excellent in the glow wire property and the mechanical property (toughness), which are properties required for electric/electronic parts, the composition is especially suitable for connector parts.

The molded article prepared by molding of the polyamide resin composition of the present invention is especially suitable for connectors to be used for liquid crystal televisions, plasma displays, PDAs, compact televisions, radios, notebook personal computers, personal computers, printers, scanners, personal computer peripherals, video decks, DVD decks, CD decks, MD decks, DAT decks, amplifiers, cassette decks, portable CD players, portable MD players, digital cameras, telephones for domestic use, telephones for office use, toys, medical devices, rice cooker parts, microwave oven parts, acoustic parts, lighting parts, refrigerator parts, air conditioner parts, facsimile parts, and copier parts.

## Claims

1. A polyamide resin composition comprising 15 to 45 parts by weight of a (B) triazine type compound, 0.01 to 4 parts by weight of a (C) colorant, and 0.01 to 2.0 parts by weight of a (D) dispersant with respect to 100 parts by weight of a (A) polyamide resin, wherein the (C) colorant has a 10% mass loss temperature of not less than 825°C in thermogravimetric analysis (TGA) according to the JIS K 7120 (1987) standard, the (D) dispersant has a 10% mass loss temperature of not less than 360°C in thermogravimetric analysis (TGA) according to the JIS K 7120 (1987) standard, and the composition has a glow wire ignition temperature measured according to IEC 60695-2-13 of not less than 775°C.

2. The polyamide resin composition according to claim 1, wherein the (D) dispersant and the (C) colorant are contained at a weight ratio of (D)/(C) of 0.15 to 200.

3. The polyamide resin composition according to claim 1 or 2, wherein the (D) dispersant contains an acid metal salt (D1) of an aliphatic carboxylic or a hydroxycarboxylic acid having not less than 12 carbon atoms with a metal ion, and / or a carboxamide wax (D2) obtained by polycondensation of an aliphatic carboxylic acid, hydroxycarboxylic acid and / or polybasic acid, with a diamine.

4. The polyamide resin composition according to claim 3, wherein the (D) dispersant contains the acid metal salt (D1) and the carboxamide type wax (D2) at a weight ratio of (D1)/(D2) = 80/20 to 20/80.

5. A molded article comprising the polyamide resin composition according to any one of claims 1 to 4.

## Patentansprüche

1. Polyamidharzzusammensetzung, die 15 bis 45 Gewichtsteile einer Verbindung vom Triazintyp (B), 0,01 bis 4 Gewichtsteile eines Farbstoffs (C) und 0,01 bis 2,0 Gewichtsteile eines Dispergiermittels (D), bezogen auf 100 Gewichtsteile eines Polyamidharzes (A) umfasst, wobei der Farbstoff (C) bei thermogravimetrischer Analyse (TGA) gemäß dem Standard JIS K 7120 (1987) eine 10%-Massenverlust-Temperatur von nicht weniger als 825 °C aufweist, das Dispergiermittel (D) bei thermogravimetrischer Analyse (TGA) gemäß dem Standard JIS K 7120 (1987) eine 10%-Massenverlust-Temperatur von nicht weniger als 360 °C aufweist und die Zusammensetzung eine gemäß IEC 60695-2-13 gemessene Glühdrahtentzündungstemperatur von nicht weniger als 775 °C aufweist.

2. Polyamidharzzusammensetzung nach Anspruch 1, wobei das Dispergiermittel (D) und der Farbstoff (C) in einem Gewichtsverhältnis (D)/(C) von 0,15 bis 200 enthalten sind.

3. Polyamidharzzusammensetzung nach Anspruch 1 oder 2, wobei das Dispergiermittel (D) ein Säuremetallsalz (D1) einer aliphatischen Carbonsäure oder Hxdroxycarbonsäure mit nicht weniger als 12 Kohlenstoffatomen mit einem Metallion und/oder ein Carboxamidwachs (D2), das durch Polykondensation einer aliphatischen Carbonsäure, Hydroxycarbonsäure und/oder mehrbasigen Säure mit einem Diamin erhalten wird, umfasst.

4. Polyamidharzzusammensetzung nach Anspruch 3, wobei das Dispergiermittel (D) das Säuremetallsalz (D1) und das Wachs vom Carbonsäureamidtyp (D2) in einem Gewichtsverhältnis (D1)/(D2) von 80/20 bis 20/80 enthält.

5. Formteil, das eine Polyamidharzzusammensetzung nach einem der Ansprüche 1 bis 4 umfasst.

## Revendications

1. Composition de résine de polyamide comprenant 15 à 45 parties en poids d'un composé de type triazine (B), 0,01 à 4 parties en poids d'un colorant (C), et 0,01 à 2,0 parties en poids d'un dispersant (D) par rapport à 100 parties en poids d'une résine de polyamide (A), dans laquelle le colorant (C) a une température de perte de masse de 10 % d'au moins 825°C en analyse thermogravimétrique (TGA) selon la norme JIS K 7120 (1987), le dispersant (D) a une température de perte de masse de 10% d'au moins 360°C en analyse thermogravimétrique (TGA) selon la norme JIS K 7120 (1987), et la composition a une température d'inflammation au fil incandescent mesurée selon CEI 60695-2-13 d'au moins 775°C.

2. Composition de résine de polyamide selon la revendication 1, dans laquelle le dispersant (D) et le colorant (C) sont contenus selon un rapport pondéral de (D)/(C) de 0,15 à 200.

3. Composition de résine de polyamide selon la revendication 1 ou 2, dans laquelle le dispersant (D) contient un sel métallique d'acide (Dl) d'un acide carboxylique aliphatique ou d'un acide hydroxycarboxylique n'ayant pas moins de 12 atomes de carbone avec un ion métallique, et/ou une cire de carboxamide (D2) obtenue par polycondensation d'un acide carboxylique aliphatique, d'un acide hydroxycarboxylique et/ou d'un acide polybasique, avec une diamine.

4. Composition de résine de polyamide selon la revendication 3, dans laquelle le dispersant (D) contient le sel métallique acide (D1) et la cire de type carboxamide (D2) selon un rapport pondéral de (D1)/(D2) = 80/20 à 20/80.

5. Article moulé comprenant la composition de résine de polyamide selon l'une quelconque des revendications 1 à 4.
